# EUROPEAN PATENT SPECIFICATION

(11) **EP 4 471 958 B1**
(45) Date of publication and mention of the grant of the patent: **18.03.2026**
(21) Application number: 23898363.9
(22) Date of filing: 01.12.2023
(51) Int. Cl.: H01M 50/291, H01M 50/204, H01M 50/588, H01M 50/24, H01M 50/264, H01M 50/211, H01M 10/613, H01M 10/647, H01M 10/6557, H01M 50/207, H01M 50/244, H01M 10/625, H01M 10/6554, H01M 10/6556, H01M 50/209, H01M 50/233, H01M 50/242, H01M 50/262

(54) **BATTERY PACK**
BATTERIEPACK
BLOC-BATTERIE

(30) Priority: 01.12.2022 KR 20220165809; 17.03.2023 KR 20230035272
(43) Date of publication of application: 04.12.2024
(73) Proprietor: LG Energy Solution, Ltd., Seoul 07335 (KR)
(72) Inventor: HUR, Nam Hoon, Daejeon 34122 (KR); SHIN, Ju Hwan, Daejeon 34122 (KR); YANG, Chang Hyeon, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019641
(87) International publication number: WO 2024/117840

(56) References cited:
- CN-U- 215 299 382
- KR-A- 20180 113 906
- KR-A- 20180 113 906
- KR-A- 20220 091 852
- KR-A- 20220 091 958
- KR-A- 20220 156 319
- US-A1- 2020 220 130
- US-A1- 2022 209 325
- US-A1- 2022 352 591

## Description

### [Technical Field]

The present invention relates to a battery pack.

The present application claims priority on Korean Patent Application No. 10-2022-0165809, filed on December 1, 2022, and Korean Patent Application No. 10-2023-0035272, filed on March 17, 2023.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present invention is directed to providing a battery pack with improved energy density.

### [Technical Solution]

To address the above problem, the present invention provides a battery pack. The battery pack includes a housing including a cooling plate and a center plate, the cooling plate including cooling channels and the center plate including a lower center beam, a first battery cell assembly and a second battery cell assembly that are disposed on the cooling plate, and a reinforcing part coupled to the lower center beam, wherein each of the first and second battery cell assemblies include a cell stack, a first cross-beam, and a second cross-beam, the first cross-beam and the second cross-beam being spaced apart from each other with the cell stack interposed therebetween, wherein a shape of the first cross-beam and a shape of the second cross-beam is different and complementary to each other, and wherein the first cross-beam of the second battery cell assembly are coupled to the reinforcing part.

The second cross-beam of the first battery cell assembly may be coupled to the reinforcing part.

The battery pack may further include an upper center beam coupled to the lower center beam and partially covering the reinforcing part.

The reinforcing part may include a center groove, and the upper center beam may be partially inserted into the center groove.

The battery pack may further include a first buried fixing device coupled to the lower center beam and configured to fix the reinforcing part.

The first cross-beam of each of the first and second battery cell assemblies may include a first plate covering a first lateral surface of the cell stack, a second plate spaced apart from the cell stack with the first plate interposed therebetween, and a first rib and a second rib respectively coupled to the first and second plates and interposed between the first and second plates, and the second cross-beam of each of the first and second battery cell assemblies may include a third plate covering a second lateral surface of the cell stack, the second lateral surface being opposite to the first lateral surface, a fourth plate spaced apart from the cell stack with the third plate interposed therebetween, and a third rib and a fourth rib respectively coupled to the third and fourth plates and interposed between the third and fourth plates.

The second rib may be in contact with a lateral surface of the reinforcing part.

The first rib may be in contact with a lower surface of the reinforcing part.

A length of the first rib may be greater than a length of the second rib.

The battery pack may further include a second buried fixing device configured to fix the reinforcing part to the first cross-beam of the second battery cell assembly.

The second buried fixing device may be disposed (e.g., buried) in the first rib.

The second buried fixing device may be disposed (e.g., buried) in the third rib.

The second buried fixing device may pass through the first rib and the reinforcing part.

Example embodiments of the present invention can provide a battery pack. The battery pack may include a housing including a support plate, a lower center beam extending across a center of the housing and located on the support plate, the lower center beam extending in a first direction, a first battery cell assembly and a second battery cell assembly that are disposed on the support plate, and a reinforcing part coupled to the lower center beam, wherein each of the first and second battery cell assemblies may include a cell stack, a first cross-beam, and a second cross-beam, the first cross-beam and the second cross-beam being spaced apart from each other with the cell stack interposed therebetween, wherein the first cross-beam and the second cross-beam beam may extend in a second direction perpendicular to the first direction, and wherein the second cross-beam of the first battery cell assembly may be coupled to the reinforcing part.

The first cross-beam of the second battery cell assembly may be coupled to the reinforcing part.

Document US2022/0352591 A1 relates to a battery pack having a structure for mounting battery modules with space efficiency and a vehicle comprising the same.

### [Advantageous Effects]

A battery pack according to example embodiments of the present invention includes reinforcing parts. Cross beams may be fixed to a center beam by the reinforcing parts, thereby improving mechanical strength of the battery pack.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view for describing a battery pack according to example embodiments of the present invention.
FIG. 2 is a perspective view for describing a battery cell assembly of FIG. 1.
FIG. 3 is a front view illustrating a first cross beam.
FIG. 4 is a cross-sectional view taken along line 3I-3I' of FIG. 3.
FIG. 5 is a front view illustrating a second cross beam.
FIG. 6 is a cross-sectional view taken along line 5I-5I' of FIG. 5.
FIG. 7 is an enlarged partial plan view of a part of FIG. 1.
FIG. 8 is a cross-sectional view taken along line 7I-7I' of FIG. 7.
FIG. 9 is a perspective view of a reinforcing part of the battery pack of FIG. 8.
FIG. 10 illustrates a part of a battery pack of other example embodiments of the present invention corresponding to FIG. 8.
FIG. 11 illustrates a part of a battery pack of other example embodiments of the present invention corresponding to FIG. 8.
FIG. 12 illustrates a part of a battery pack of other example embodiments of the present invention corresponding to FIG. 8.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention, which is defined by the appended claims.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

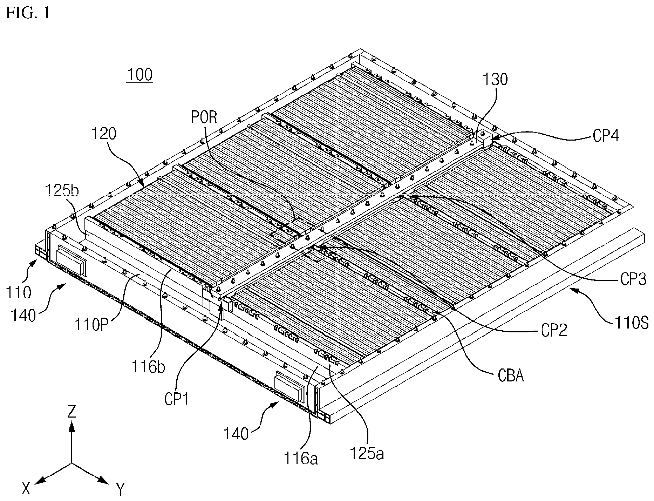

FIG. 1 is a perspective view for describing a battery pack 100 according to embodiments.

Referring to FIG. 1, the battery pack 100 may include a housing 110, a plurality of battery cell assemblies 120, an upper center beam 130, and a plurality of exhaust devices 140. The battery pack 100 is a final form of a battery system mounted on a mobility or the like.

The housing 110 may provide a space in which the plurality of battery cell assemblies 120 are arranged. The housing 110 may include a support plate 110P and side walls 110S.

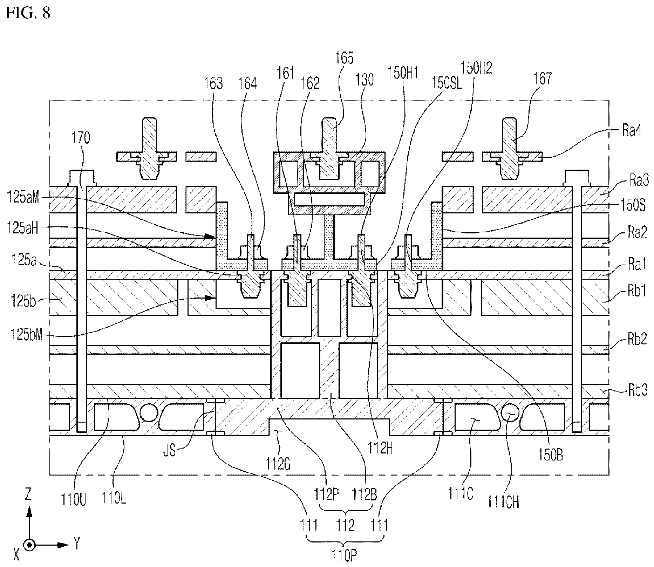

The support plate 110P may include an upper surface 110U (see FIG. 8) and a lower surface 110L (see FIG. 8) that are substantially parallel to each other. Two directions substantially parallel to the upper surface 110U (see FIG. 8) of the support plate 110P are defined as an X-axis direction and a Y-axis direction, and a direction substantially perpendicular to the upper surface 110U (see FIG. 8) of the support plate 110P is defined as a Z-axis direction. The X-axis direction, the Y-axis direction, and the Z-axis direction may be substantially perpendicular to one another. Unless otherwise mentioned, the definition of direction will apply to the following drawings. When the plurality of battery cell assemblies 120 are described, the X-axis direction, the Y-axis direction, and the Z-axis direction are defined with respect to a case in which the plurality of battery cell assemblies 120 are mounted on the battery pack 100.

The side walls 110S may be coupled to the support plate 110P. The side walls 110S may extend in the Z-axis direction. The side walls 110S may include an inner empty space and may thus be light in weight.

The plurality of battery cell assemblies 120 may be on the support plate 110P of the housing 110. The support plate 110P may support the plurality of battery cell assemblies 120. The side walls 110S may horizontally surround the plurality of battery cell assemblies 120.

A first cross-beam 125a of the battery cell assemblies 120 at both ends in the X-axis direction may be coupled to a first support beam 116a on the support plate 110P of the housing 110. The first cross-beam 125a and the first support beam 116a may be fixed to the support plate 110P of the housing 110 by a mechanical means such as a bolt or the like.

A second cross-beam 125b of the battery cell assemblies 120 at both ends in the X-axis direction may be coupled to a second support beam 116b. The second support beam 116b may be on the second cross-beam 125b. The second cross-beam 125b and the second support beam 116b may be fixed to the support plate 110P of the housing 110 by a mechanical means such as a bolt or the like.

The plurality of battery cell assemblies 120 may be arranged in the X-axis direction and the Y-axis direction. In FIG. 1, the number of battery cell assemblies 120 arranged in the X-axis direction is three, and the number of battery cell assemblies 120 arranged in the Y-axis direction is two. Accordingly, the arrangement of the plurality of battery cell assemblies 120 may be referred to as an array of 3x2. The plurality of battery cell assemblies 120 arranged in an array of M×N may be easily derived by those of ordinary skill in the art, based on the above description. Here, M and N are each an integer greater than or equal to 2.

The upper center beam 130 may extend between opposite side walls 110S. The upper center beam 130 may extend in the X-axis direction. The upper center beam 130 may be in contact with one of the side walls 110S. The upper center beam 130 may separate the plurality of battery cell assemblies 120 from each other. The upper center beam 130 may be interposed between the plurality of battery cell assemblies 120.

A plurality of exhaust devices 140 may be coupled to some of the side walls 110S. The side walls 110S may include an exhaust path connected to the plurality of exhaust devices 140. The plurality of exhaust devices 140 may be configured to delay thermal propagation by discharging a high-temperature gas from the inside of the battery pack 100 to the outside when at least one of the plurality of battery cell assemblies 120 is in a thermal runway state.

Here, the thermal runaway state of the plurality of battery cell assemblies 120 is a state in which a change of temperature of the plurality of battery cell assemblies 120 accelerates the change of temperature, i.e., an uncontrollable positive feedback. The temperature of the plurality of battery cell assemblies 120 that are in the thermal runaway state sharply increase, and a large amount of high-pressure gas and combustion debris are discharged.

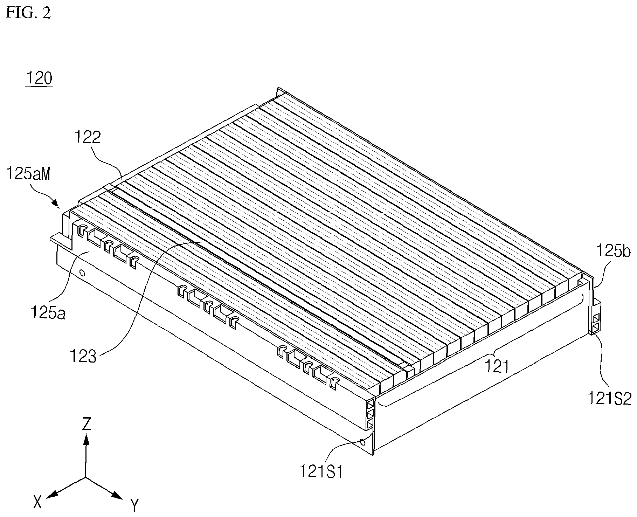

FIG. 2 is a perspective view for describing the battery cell assembly 120 of FIG. 1.

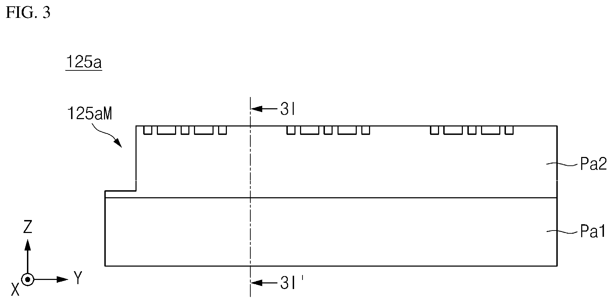

FIG. 3 is a front view illustrating the first cross-beam 125a.

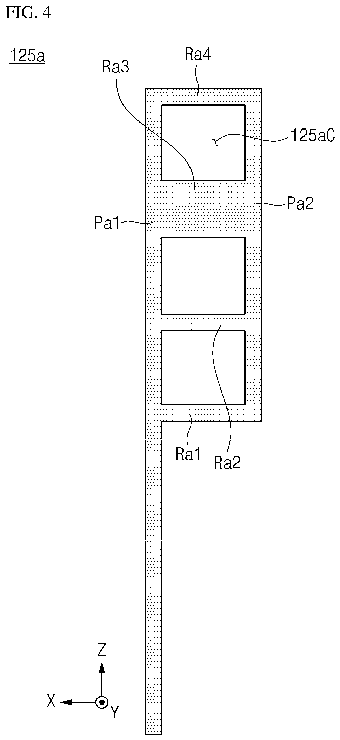

FIG. 4 is a cross-sectional view taken along line 3I-3I' of FIG. 3. In FIG. 4, broken lines are imaginary boundary lines that separate plates Pa1 and Pa2 from ribs Ra1, Ra2, Ra3, and Ra4.

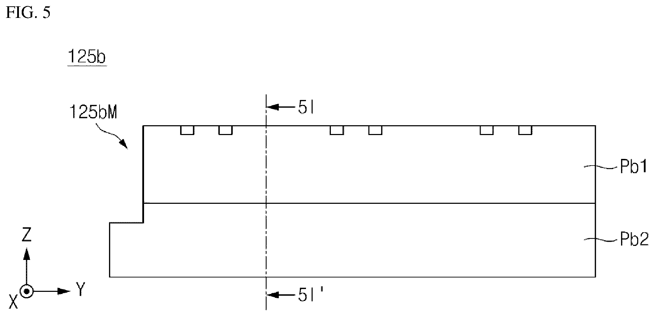

FIG. 5 is a front view illustrating the second cross-beam 125b.

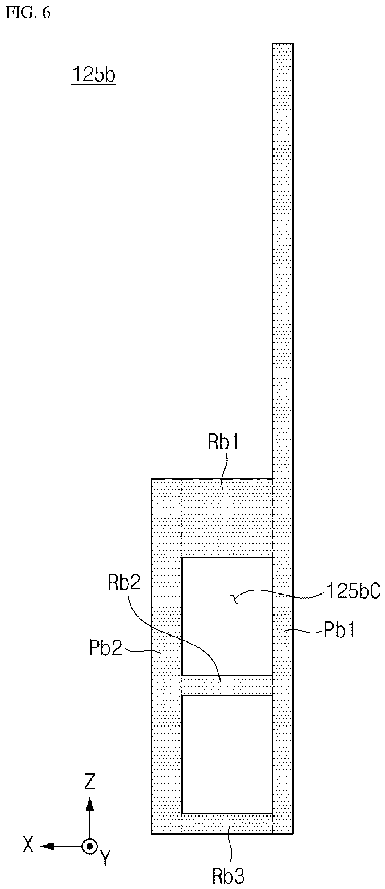

FIG. 6 is a cross-sectional view taken along line 5I-5I' of FIG. 5. In FIG. 6, broken lines are imaginary boundary lines that separate plates Pb1 and Pb2 from ribs Rb1, Rb2, and Rb3.

Referring to FIGS. 2 to 6, the battery cell assembly 120 may include a cell stack 121, a bus bar plate 122, a flat flexible cable (FFC) assembly 123, a first cross-beam 125a, and a second cross-beam 125b.

The cell stack 121 may include a plurality of battery cells. A battery cell is a basic unit of a lithium ion battery, i.e., a secondary battery. The battery cell includes an electrode assembly, an electrolyte, and a case. Battery cells are classified into a lithium ion battery, a lithium ion polymer battery, a lithium polymer battery, etc. according to a configuration of an electrode assembly and an electrolyte. A market share of lithium ion polymer batteries in the field of secondary battery is increasing due to a low possibility of leakage of an electrolyte and easiness in manufacturing.

A battery cell may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

According to example embodiments, the plurality of battery cells of the cell stack 121 may be connected in series and/or in parallel. For example, the plurality of battery cells may be connected to each other in series. As another example, the plurality of battery cells may be connected to each other in parallel. As another example, the cell stack 121 may include a plurality of banks connected to each other in series, and each of the plurality of banks may include a plurality of battery cells connected to each other in parallel.

According to example embodiments, the cell stack 121 may further include a plurality of separators. The plurality of separators may horizontally support the plurality of battery cells and absorb swelling of the plurality of battery cells. According to embodiments, the plurality of separators may be thermal barriers. According to example embodiments, each of the plurality of separators may have a high melting temperature and a low thermal conductivity. According to example embodiments, each of the plurality of separators may include a flame retardant material such as a ceramic and a coated glass material. According to example embodiments, the plurality of separators may be configured to emit a fire retarding material and a fire extinguishing agent when a thermal runaway event occurs.

The FFC assembly 123 may be on the cell stack 121. The FFC assembly 123 may provide a path for transmitting a sensing signal such as voltages of a plurality of nodes in the cell stack 121.

The first cross-beam 125a and the second cross-beam 125b of the battery cell assembly 120 are spaced apart from each other with the cell stack 121 interposed therebetween. The first cross-beam 125a and the second cross-beam 125b may cover the cell stack 121. The first cross-beam 125a and the second cross-beam 125b may be fixed to the cell stack 121 by an adhesive material or the like.

The first cross-beam 125a of the battery cell assembly 120 may include plates Pa1 and Pa2 and ribs Ra1, Ra2, Ra3, and Ra4. The plates Pa1 and Pa2 may be substantially perpendicular to the X-axis direction. The plates Pa1 and Pa2 may be spaced apart from each other in the X-axis direction. The plate Pa1 may be in contact with the cell stack 121. The plate Pa1 may cover a first lateral surface 121S1 of the cell stack 121. The plate Pa2 may be spaced apart from the cell stack 121 with the plate Pa1 interposed therebetween. A length of the plate Pa1 in the Z-axis direction may be greater than a length of the plate Pa2 in the Z-axis direction.

The ribs Ra1, Ra2, Ra3, and Ra4 may be substantially perpendicular to the Z-axis direction. The ribs Ra1, Ra2, Ra3, and Ra4 may be spaced apart from one another in the Z-axis direction. The ribs Ra1, Ra2, Ra3, and Ra4 may be interposed between the plates Pa1 and Pa2. The ribs Ra1, Ra2, Ra3, and Ra4 may be connected to the plates Pa1 and Pa2. The ribs Ra2 and Ra3 may be interposed between the ribs Ra1 and Ra4.

A distance between the FFC assembly 123 and the rib Ra1 in the Z-axis direction may be greater than a distance between the FFC assembly 123 and the rib Ra2 in the Z-axis direction. A distance between the FFC assembly 123 and the rib Ra2 in the Z-axis direction may be greater than a distance between the FFC assembly 123 and the rib Ra3 in the Z-axis direction. A distance between the FFC assembly 123 and the rib Ra3 in the Z-axis direction may be greater than a distance between the FFC assembly 123 and the rib Ra4 in the Z-axis direction.

There may be an empty space 125aC between the plates Pa1 and Pa2 and the ribs Ra1, Ra2, Ra3, and Ra4. Accordingly, the first cross-beam 125a may be reduced in weight, and energy density of the battery pack 100 may be improved. The plate Pa1 may be referred to as a first plate, the plate Pa2 may be referred to as a second plate, the rib Ra1 may be referred to as a first rib, and the rib Ra2 may be referred to as a second rib.

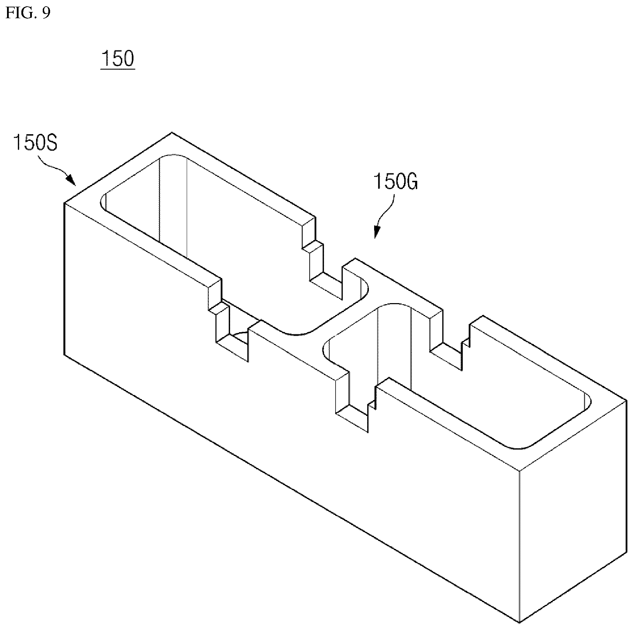

The first cross-beam 125a may include a coupling part 125aM. The coupling part 125aM is a part of the first cross-beam 125a that is in contact with a reinforcing part 150 (see FIG. 9) to be described below. Accordingly, a length of the rib Ra1 in the Y-axis direction may be different from a length of each of the ribs Ra2, Ra3, and Ra4 in the Y-axis direction. The length of the rib Ra1 in the Y-axis direction may be greater than the length of each of the ribs Ra2, Ra3, and Ra4 in the Y-axis direction. The lengths of the ribs Ra2, Ra3, and Ra4 in the Y-axis direction may be substantially the same.

The second cross-beam 125b of the battery cell assembly 120 may include plates Pb1 and Pb2 and ribs Rb1, Rb2 and Rb3. The plates Pb1 and Pb2 may be substantially perpendicular to the X-axis direction. The plates Pb1 and Pb2 may be spaced apart from each other in the X-axis direction. The plate Pb1 may be in contact with the cell stack 121. The plate Pb1 may cover a second lateral surface 121S2 of the cell stack 121. The second lateral surface 121S2 may be opposite to the first lateral surface 121S1. The plate Pb2 may be spaced apart from the cell stack 121 with the plate Pb1 interposed therebetween. A length of the plate Pb1 in the Z-axis direction may be greater than a length of the plate Pb2 in the Z-axis direction.

The ribs Rb1, Rb2, and Rb3 may be substantially perpendicular to the Z-axis direction. The ribs Rb1, Rb2, and Rb3 may be spaced apart from one another in the Z-axis direction. The ribs Rb1, Rb2, and Rb3 may be interposed between the plates Pb1 and Pb2. The ribs Rb1, Rb2, and Rb3 may be connected to the plates Pb1 and Pb2. The ribs Rb2 may be interposed between the ribs Rb1 and Rb3.

A distance between the FFC assembly 123 and the rib Rb1 in the Z-axis direction may be less than a distance between the FFC assembly 123 and the rib Rb2 in the Z-axis direction. A distance between the FFC assembly 123 and the rib Rb2 in the Z-axis direction may be less than a distance between the FFC assembly 123 and the rib Rb3 in the Z-axis direction.

There may be an empty space 125bC between the plates Pb1 and Pb2 and the ribs Rb1, Rb2, and Rb3. Accordingly, the second cross-beam 125b may be reduced in weight, and energy density of the battery pack 100 may be improved. The plate Pb1 may be referred to as a third plate, the plate Pb2 may be referred to as a fourth plate, the rib Rb1 may be referred to as a third rib, and the rib Rb2 may be referred to as a fourth rib.

The second cross-beam 125b may include a coupling part 125bM. The coupling part 125bM may provide a space for a buried the second buried fixing device 163 (see FIG. 8) for fixing the reinforcing parts 150 (see FIG. 9) to be described below. Accordingly, a thickness of the rib Rb1 in the Z-axis direction may be variable. More specifically, the thickness of the rib Rb1 of the coupling part 125bM in the Z-axis direction may be less than the thickness of the rib Rb1 spaced apart from the coupling part 125bM in the Z-axis direction.

According to example embodiments, the second cross-beam 125b of each of the battery cell assemblies 120 may be coupled to the first cross-beam 125a of a subsequent battery cell assembly 120. In this case, a lower portion of the plate Pa1 may face the plate Pb2, an upper portion of the plate Pb1 may face the plate Pa2, and the rib Ra1 may face the rib Rb1.

Referring to FIGS. 1 and 2, the first cross-beam 125a and the second cross-beam 125b form a cross-beam assembly CBA (see FIG. 1) together. The cross-beam assembly CBA may extend in a direction perpendicular to the upper center beam 130 (i.e., the Y-axis direction). The cross-beam assembly CBA may isolate the cell stacks 121 in the X-axis direction. The cross-beam assembly CBA may be interposed between adjacent cell stacks 121.

According to example embodiments, the first cross-beam 125a and the second cross-beam 125b have different and complementary shapes. The second cross-beam 125b of each of the plurality of battery cell assemblies 120 may be coupled to the first cross beam 125a of a subsequent battery cell assembly 120. The first cross-beam 125a and the second cross-beam 125b of each cross-beam assembly CBA are engaged with each other.

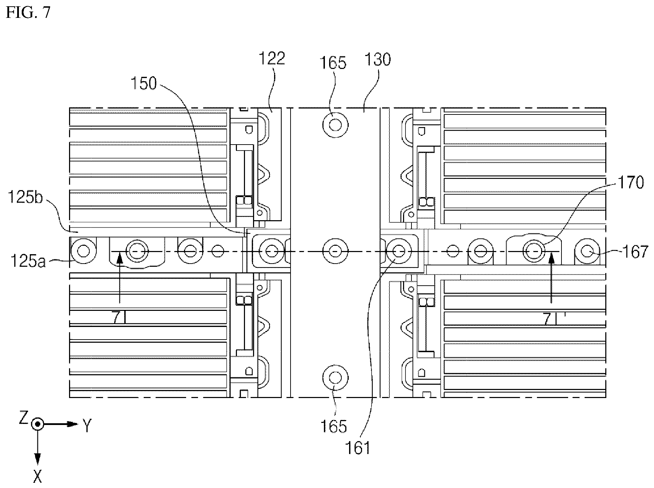

FIG. 7 is an enlarged partial plan view of a part POR of FIG. 1.

FIG. 8 is a cross-sectional view taken along line 7I-7I' of FIG. 7. In FIG. 8, a broken line is an imaginary boundary line separating the plate portion 112P from the lower center beam 112B.

FIG. 9 is a perspective view of the reinforcing part 150 of the battery pack of FIG. 8.

Referring to FIGS. 1 and 7 to 9, the battery pack 100 may further include reinforcing parts 150, first to fourth buried fixing devices 161, 163, 165, and 167, nuts 162 and 164, and long bolts 170.

According to example embodiments, the support plate 110P may include cooling plates 111 and a center plate 112 that are welded together by friction stir welding. When the cooling plates 111 and the center plate 112 are coupled by friction stirring welding, there may be a welded surface JS, which is a boundary surface, between the cooling plates 111 and the center plate 112. According to example embodiments, the support plate 110P may include only a single plate.

The cooling plates 111 may include a plurality of cooling channels 111CH that are flow paths of a cooling fluid. The cooling plates 111 may include a plurality of cavities 111C, thus resulting in a reduction of the weight of the cooling plates 111. Each of the plurality of cooling channels 111CH and the plurality of cavities 111C may extend in the X-axis direction.

The center plate 112 may be on a central portion (more specifically, a central portion in the Y-axis direction) of the housing 110. The center plate 112 may include a plate part 112P and a lower center beam 112B. The lower center beam 112B may protrude from the plate part 112P in the Z-axis direction. The lower center beam 112B may overlap the upper center beam 130. The upper center beam 130 may be fixed to the lower center beam 112B by a mechanical means such as a bolt.

The lower center beam 112B may extend in the X-axis direction. As a non-limiting example, a length of the lower center beam 112B in the X-axis direction may be substantially the same as a length of the upper center beam 130 in the X-axis direction. According to example embodiments, each of the upper center beam 130 and the lower center beam 112B may include an empty space therein, thus resulting in a reduction of the upper center beam 130 and the lower center beam 112B in weight.

The plurality of battery cell assemblies 120 may be on the cooling plate 111. Generally, an area of each of the plurality of battery cell assemblies 120 may face the cooling plates 111. Accordingly, a narrow area of the center plate 112 faces each of the plurality of battery cell assemblies 120 and thus the center plate 112 may not include a cooling channel. The center plate 112 may include a groove 112G that is formed in a lower surface of the support plate 110P and overlaps the lower center beam 112B in the Z-axis direction. The groove 112G may extend in the X-axis direction.

The reinforcing parts 150 may have a roughly bar shape. The reinforcing parts 150 may include a groove 150G. The upper center beam 130 may be partially inserted into the groove 150G. The groove 150G may have a shape complementary to a part of the upper center beam 130. For example, the upper center beam 130 may have a T-shaped cross section, and the groove 150G may have a shape complementary to the cross section of the upper center beam 130.

According to example embodiments, the reinforcing parts 150 may be at points of intersection CP2 and CP3 of the cross-beam assemblies CBA and the lower center beam 112B. According to example embodiments, the reinforcing parts 150 may be at points of intersection CP1 and CP4 of the first and second cross-beams 125a and 125b and the lower center beam 112B. In this case, the battery pack 100 may include the four points of intersection CP1, CP2, CP3, and CP4, with an equal number of reinforcing parts 150 at each intersection.

In another example, the reinforcing parts 150 may be disposed at only the points of intersection CP1, CP2, and CP3. Accordingly, the assembly of the battery pack 100 may be prevented from being delayed due to interference between the side wall 110S and the reinforcing parts 150. In this case, the battery pack 100 may include the four points of intersection CP1, CP2, CP3, and CP4 and three reinforcing parts 150. That is, the number of the reinforcing parts 150 may be less by one than the number of the points of intersection CP1, CP2, CP3, and CP4.

The reinforcing parts 150 may also be at only the points of intersection CP2 and CP3 of the cross-beam assemblies CBA and the lower center beam 112B. In this case, the battery pack 100 may include the four points of intersection CP1, CP2, CP3, and CP4 and two reinforcing parts 150. That is, the number of the reinforcing parts 150 may be less by two than the number of the points of intersection CP1, CP2, CP3, and CP4.

The reinforcing parts 150 may be on the first cross-beams 125a and the lower center-beam 112B. The reinforcing parts 150 may be in contact with the first cross-beams 125a and the lower center beam 112B. The lower center beam 112B may be in contact with a lower surface 150B of the reinforcing parts150. The first cross-beams 125a may be in contact with the lower surface 150B and one of lateral surfaces 150S of the reinforcing parts 150. Ribs Ra1 of the first cross-beams 125a may be in contact with the lower surface 150B of the reinforcing parts 150. Each of ribs Ra2 and Ra3 of the first cross-beams 125a may be in contact with one of the lateral surfaces 150S of the reinforcing parts 150.

According to example embodiments, the reinforcing parts 150 may be fixed to the lower center beam 112B by the first buried fixing devices 161. The first buried fixing devices 161 may be partially buried in the lower center beam 112B. The lower center beam 112B may include a plurality of holes 112H for installing the first buried fixing devices 161. The nuts 162 may be coupled to the first buried fixing devices 161 and thus the reinforcing parts 150 and the lower center beam 112B may be fixed to each other.

According to example embodiments, the reinforcing parts 150 may be fixed to the first cross-beams 125a by the second buried fixing devices 163. The second buried fixing devices 163 may be partially buried in the ribs Ra1 of the first cross-beams 125a. The first cross-beams 125a may include a plurality of holes 125aH for installing the second buried fixing devices 163. The nuts 164 may be coupled to the second buried fixing devices 163 and thus the reinforcing parts 150 and the first cross-beams 125a may be fixed to each other.

The reinforcing parts 150 may include first holes 150H1 through which the first buried fixing devices 161 pass, and second holes 150H2 through which the second buried fixing devices 163 pass. Slots 150SL may be positioned between the first holes 150H1 and the second holes 150H2. A length of each of the slots 150SL in the X-axis direction may be greater than a length of each of the slots 150SL in the Y-axis direction but embodiments are not limited thereto. Each of the first and second holes 150H1 and 150H2 and the slots 150SL may be in the lower surface of the reinforcing parts 150.

The third buried fixing devices 165 may be partially buried in the upper center beam 130. The fourth buried fixing devices 167 may be partially buried in the rib Ra4 of the first cross-beam 125a. The third and fourth buried fixing devices 165 and 167 may be used to fix a lid plate to be described below.

The long bolts 170 may be coupled to the support plate 110P while passing through the first and second cross-beams 125a and 125b in the Z-axis direction. Accordingly, the first and second cross-beams 125a and 125b may be fixed to the support plate 110P.

The battery pack 100 may further include electronic components. The electronic components may be on the housing 110. The electronic components may be between the side wall 110S on which the exhaust devices 140 are installed and the plurality of battery cell assemblies 120. The electronic components may include an electronic device required to drive a battery pack.

The electronic components may include, for example, a battery management system (BMS). The BMS may be configured to monitor, balance, and control the battery pack. Monitoring of the battery pack 100 may include measuring voltages and currents of certain nodes inside the plurality of battery cell assemblies 120 and measuring temperatures at set positions in the battery pack 100. The battery pack 100 may include measuring instruments for measuring voltages, currents, and temperatures as described above.

Balancing of the battery pack 100 is an operation of reducing a deviation between the plurality of battery cell assemblies 120. Controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and an external load (e.g., a motor of a vehicle), when abnormal voltage such as voltage surges occurs.

The battery pack 100 may further include a plurality of inter-bus bars configured to electrically connect the plurality of battery cell assemblies 120. The plurality of battery cell assemblies 120 may be connected in series by the plurality of inter-bus bars. Accordingly, the battery pack 100 may be configured to output a high voltage to an external load (e.g., a motor of a vehicle).

The battery pack 100 may further include a lid plate coupled to the side walls 110S. The lid plate may cover elements inside the battery pack 100 such as the battery cell assemblies 120 and electronic components. The lid plate may be fixed to the battery pack 100 by, for example, a mechanical coupling means such as the third and fourth buried fixing devices 165 and 167.

### (Second Embodiment)

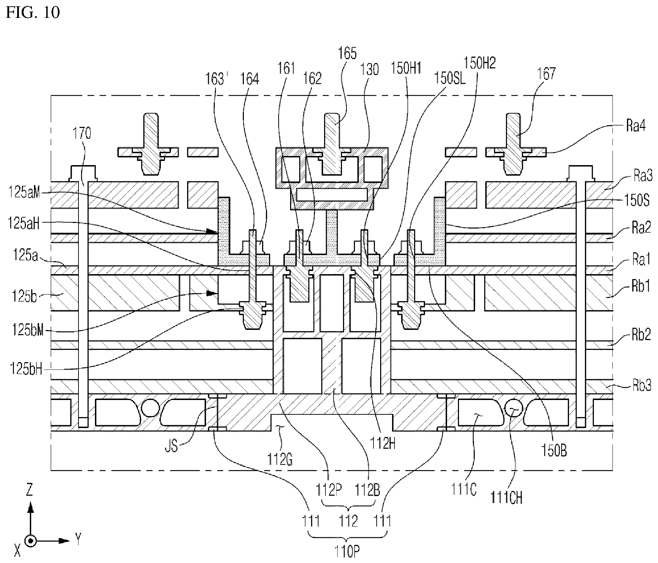

FIG. 10 illustrates a part of a battery pack of other example embodiments corresponding to FIG. 8. For convenience of description, difference from FIG. 8 will be mainly described. In FIG. 10, a broken line is an imaginary boundary line separating a plate part 112P and a lower center beam 112B.

In the present embodiment, second buried fixing devices 163' are buried in second cross-beams 125b. Accordingly, reinforcing parts 150 may be fixed to first cross-beams 125a and the second cross-beams 125b. The second buried fixing devices 163' may pass through the reinforcing parts 150 and the first cross-beams 125a. The second cross-beams 125b may include a hole 125bH in which the second buried fixing devices 163' are buried.

### (Third Embodiment)

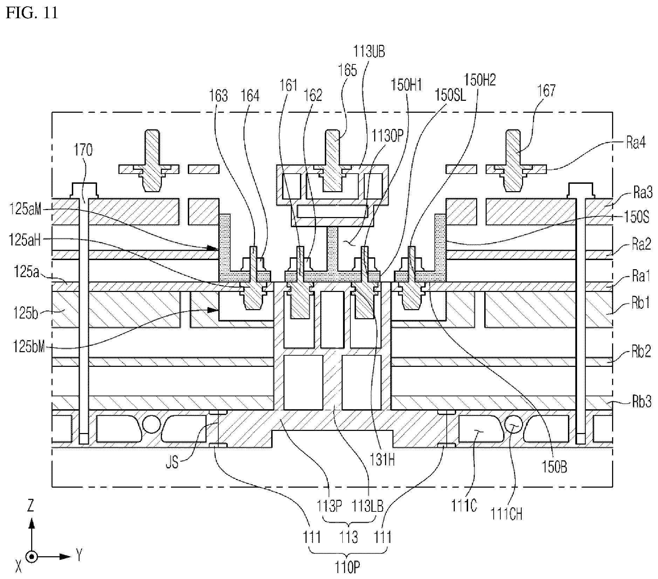

FIG. 11 illustrates a part of a battery pack of other example embodiments corresponding to FIG. 8. In FIG. 11, a broken line is an imaginary boundary line separating a plate part 113P and a lower center beam 113LB.

In the present embodiment, a center plate 113 may include a plate part 113P, a lower center beam 113LB, and an upper center beam 113UB. That is, the upper center beam 113UB and the lower center beam 113LB are integrally provided. The reinforcing part 150 may be assembled through an opening 113OP between the upper center beam 113UB and the lower center beam 113LB. The plate part 113P and the lower center beam 113LB are substantially the same as the plate part 112P and the lower center beam 112B of FIG. 8. The lower center beam 113LB may include a plurality of holes 131H for installing first buried fixing devices 161.

### (Fourth Embodiment)

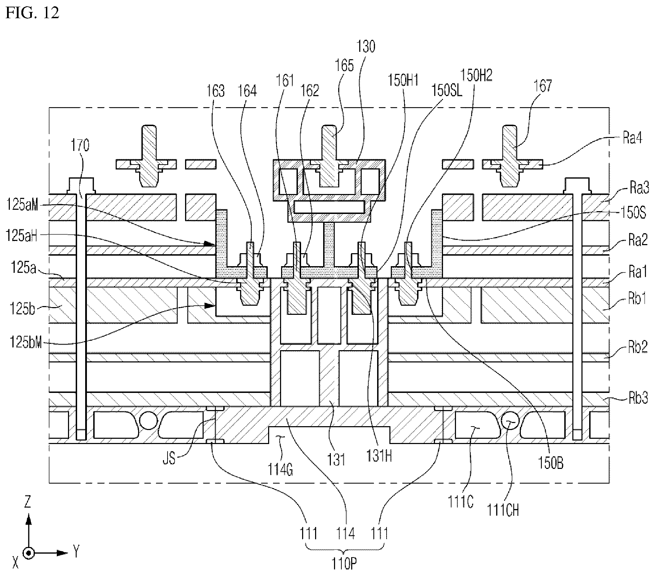

FIG. 12 illustrates a part of a battery pack of other example embodiments corresponding to FIG. 8. In the present embodiment, a lower center beam 131 is an element separate from a center plate 114. The center plate 114 is substantially the same as the plate part 112P of the center plate 112 of FIG. 8. The lower center beam 131 may be on the center plate 114.

The lower center beam 131 is similar to the lower center beam 112B of FIG. 8. The lower center beam 131 may extend in the X-axis direction. The lower center beam 131 may overlap the upper center beam 130. A length of the lower center beam 131 in the X-axis direction may be substantially the same as a length of the upper center beam 130 in the X-axis direction. The lower center beam 131 may include an empty space extending in the X-axis direction and thus may be reduced in weight. The lower center beam 131 may include holes 131H for burying first buried fixing devices. The center plate 114 may include a groove 114G that is formed in a lower surface of the support plate 110P and overlaps the lower center beam 131 in the Z-axis direction. The groove 114G may extend in the X-axis direction.

The present invention has been described above in more detail with reference to the drawings, the embodiments, etc. However, the configurations illustrated in the drawings or embodiments described in the present specification are only embodiments of the present invention as defined by the appended claims.

## Claims

1. A battery pack (100) comprising:
a housing (110) including a cooling plate (111) and a center plate (112), the cooling plate (111) including cooling channels (111CH) and the center plate (112) including a lower center beam (112B);
a first battery cell assembly and a second battery cell assembly (120) that are on the cooling plate (111); and
a reinforcing part (150) coupled to the lower center beam (112B),
wherein each of the first and second battery cell assemblies (120) includes a cell stack (121), a first cross-beam (125a), and a second cross-beam (125b), the first cross-beam and the second cross-beam (125a, 125b) being spaced apart from each other with the cell stack (121) interposed therebetween,
wherein a shape of the first cross-beam (125a) and a shape of the second cross-beam (125b) are different and complementary to each other,
wherein the second cross-beam (125b) of the first battery cell assembly and the first cross beam (125a) of the second battery cell assembly are engaged with each other to form a cross-beam assembly (CBA); and
wherein the first cross-beam (125a) of the second battery cell assembly (120) is coupled to the reinforcing part (150).

2. The battery pack (100) of claim 1, wherein the second cross-beam (125b) of the first battery cell assembly (120) is coupled to the reinforcing part (150).

3. The battery pack (100) of claim 1, further comprising an upper center beam (130) coupled to the lower center beam (112B) and partially covering the reinforcing part (150).

4. The battery pack (100) of claim 3, wherein the reinforcing part (150) includes a center groove (150G), and
wherein the upper center beam (130) is partially inserted into the center groove (150G).

5. The battery pack (100) of claim 1, further comprising a first buried fixing device (161) coupled to the lower center beam (112B) and configured to fix the reinforcing part (150).

6. The battery pack (100) of claim 1, wherein the first cross-beam (125a) of each of the first and second battery cell assemblies (120) includes:
a first plate (Pa1) covering a first lateral surface (121S1) of the cell stack (121);
a second plate (Pa2) spaced apart from the cell stack (121) with the first plate (Pa1) interposed therebetween; and
a first rib (Ra1) and a second rib (Ra2) respectively coupled to the first and second plates (Pa1, Pa2) and interposed between the first and second plates (Pa1, Pa2), and
wherein the second cross-beam (125b) of each of the first and second battery cell assemblies (120) includes:
a third plate (Pb1) covering a second lateral surface (121S2) of the cell stack (121), wherein the second lateral surface (121S2) is opposite to the first lateral surface (121S1);
a fourth plate (Pb2) spaced apart from the cell stack (121) with the third plate (Pb1) interposed therebetween; and
a third rib (Rb1) and a fourth rib (Rb2) respectively coupled to the third and fourth plates (Pb1, Pb2) and interposed between the third and fourth plates (Pb1, Pb2).

7. The battery pack (100) of claim 6, wherein the second rib (Ra2) is in contact with a lateral surface of the reinforcing part (150).

8. The battery pack (100) of claim 6, wherein the first rib (Ra1) is in contact with a lower surface of the reinforcing part (150).

9. The battery pack (100) of claim 6, wherein a length of the first rib (Ra1) is greater than a length of the second rib (Ra2).

10. The battery pack (100) of claim 8, further comprising a second buried fixing device (163) configured to fix the reinforcing part (150) to the first cross-beam (125a) of the second battery cell assembly (120).

11. The battery pack (100) of claim 10, wherein the second buried fixing device (163) is disposed in the first rib (Ra1).

12. The battery pack (100) of claim 10, wherein the second buried fixing device (163) is disposed in the third rib (Rb 1).

13. The battery pack (100) of claim 12, wherein the second buried fixing device (163) passes through the first rib (Ra1) and the reinforcing part (150).

## Patentansprüche

1. Batteriepack (100), umfassend:
ein Gehäuse (110), welches eine Kühlplatte (111) und eine Mittelplatte (112) umfasst, wobei die Kühlplatte (111) Kühlkanäle (111CH) umfasst und die Mittelplatte (112) einen unteren Mittelträger (112B) umfasst;
eine erste Batteriezellanordnung und eine zweite Batteriezellanordnung (120), welche an der Kühlplatte (111) vorliegen; und
einen Verstärkungsteil (150), welcher mit dem unteren Mittelträger (112B) gekoppelt ist,
wobei jede der ersten und der zweiten Batteriezellanordnung (120) einen Zellstapel (121), einen ersten Querträger (125a) und einen zweiten Querträger (125b) umfasst, wobei der erste Querträger und der zweite Querträger (125a, 125b) voneinander beabstandet sind, wobei der Zellstapel (121) dazwischen eingefügt ist,
wobei eine Form des ersten Querträgers (125a) und eine Form des zweiten Querträgers (125b) unterschiedlich und komplementär zueinander sind,
wobei der zweite Querträger (125b) der ersten Batteriezellanordnung und der erste Querträger (125a) der zweiten Batteriezellanordnung miteinander in Eingriff stehen, um eine Querträgeranordnung (CBA) zu bilden; und
wobei der erste Querträger (125a) der zweiten Batteriezellanordnung (120) mit dem Verstärkungsteil (150) gekoppelt ist.

2. Batteriepack (100) nach Anspruch 1, wobei der zweite Querträger (125b) der ersten Batteriezellanordnung (120) mit dem Verstärkungsteil (150) gekoppelt ist.

3. Batteriepack (100) nach Anspruch 1, ferner umfassend einen oberen Mittelträger (130), welcher mit dem unteren Mittelträger (112B) gekoppelt ist und den Verstärkungsteil (150) teilweise bedeckt.

4. Batteriepack (100) nach Anspruch 3, wobei der Verstärkungsteil (150) eine Mittelnut (150G) umfasst, und
wobei der obere Mittelträger (130) teilweise in die Mittelnut (150G) eingesetzt ist.

5. Batteriepack (100) nach Anspruch 1, ferner umfassend eine erste verdeckte Fixiervorrichtung (161), welche mit dem unteren Mittelträger (112B) gekoppelt ist und dazu eingerichtet ist, den Verstärkungsteil (150) zu fixieren.

6. Batteriepack (100) nach Anspruch 1, wobei der erste Querträger (125a) jeder der ersten und der zweiten Batteriezellanordnung (120) umfasst:
eine erste Platte (Pa1), welche eine erste laterale Fläche (121S1) des Zellstapels (121) bedeckt;
eine zweite Platte (Pa2), welche von dem Zellstapel (121) beabstandet ist, wobei die erste Platte (Pa1) dazwischen eingefügt ist; und
eine erste Rippe (Ra1) und eine zweite Rippe (Ra2), welche jeweils mit der ersten und der zweiten Platte (Pa1, Pa2) gekoppelt sind und zwischen der ersten und der zweiten Platte (Pa1, Pa2) eingefügt sind, und
wobei der zweite Querträger (125b) jeder der ersten und der zweiten Batteriezellanordnung (120) umfasst:
eine dritte Platte (Pb1), welche eine zweite laterale Fläche (121S2) des Zellstapels (121) bedeckt, wobei die zweite laterale Fläche (121S2) der ersten lateralen Fläche (121S1) entgegengesetzt ist;
eine vierte Platte (Pb2), welche von dem Zellstapel (121) beabstandet ist, wobei die dritte Platte (Pb1) dazwischen eingefügt ist; und
eine dritte Rippe (Rb1) und eine vierte Rippe (Rb2), welche jeweils mit der dritten und der vierten Platte (Pb1, Pb2) gekoppelt sind und zwischen der dritten und der vierten Platte (Pb1, Pb2) eingefügt sind.

7. Batteriepack (100) nach Anspruch 6, wobei die zweite Rippe (Ra2) mit einer lateralen Fläche des Verstärkungsteils (150) in Kontakt steht.

8. Batteriepack (100) nach Anspruch 6, wobei die erste Rippe (Ra1) mit einer unteren Fläche des Verstärkungsteils (150) in Kontakt steht.

9. Batteriepack (100) nach Anspruch 6, wobei eine Länge der ersten Rippe (Ra1) größer ist als eine Länge der zweiten Rippe (Ra2).

10. Batteriepack (100) nach Anspruch 8, ferner umfassend eine zweite verdeckte Fixiervorrichtung (163), welche dazu eingerichtet ist, den Verstärkungsteil (150) an dem ersten Querträger (125a) der zweiten Batteriezellanordnung (120) zu fixieren.

11. Batteriepack (100) nach Anspruch 10, wobei die zweite verdeckte Fixiervorrichtung (163) in der ersten Rippe (Ra1) angeordnet ist.

12. Batteriepack (100) nach Anspruch 10, wobei die zweite verdeckte Fixiervorrichtung (163) in der dritten Rippe (Rb1) angeordnet ist.

13. Batteriepack (100) nach Anspruch 12, wobei die zweite verdeckte Fixiervorrichtung (163) durch die erste Rippe (Ra1) und den Verstärkungsteil (150) hindurchgeführt ist.

## Revendications

1. Bloc-batterie (100) comprenant :
un boîtier (110) comportant une plaque de refroidissement (111) et une plaque centrale (112), la plaque de refroidissement (111) comportant des canaux de refroidissement (111CH) et la plaque centrale (112) comportant une poutre centrale inférieure (112B) ;
un premier ensemble de cellules de batterie et un second ensemble de cellules de batterie (120) qui se trouvent sur la plaque de refroidissement (111) ; et
une partie de renfort (150) couplée à la poutre centrale inférieure (112B),
dans lequel chacun des premier et second ensembles de cellules de batterie (120) comporte un empilement de cellules (121), une première traverse (125a) et une seconde traverse (125b), la première traverse et la seconde traverse (125a, 125b) étant espacées l'une de l'autre avec l'empilement de cellules (121) interposé entre elles, dans lequel une forme de la première traverse (125a) et une forme de la seconde traverse (125b) sont différentes et complémentaires l'une de l'autre,
dans lequel la seconde traverse (125b) du premier ensemble de cellules de batterie et la première traverse (125a) du second ensemble de cellules de batterie sont en prise l'une avec l'autre pour former un ensemble de traverses (CBA) ; et
dans lequel la première traverse (125a) du second ensemble de cellules de batterie (120) est couplée à la partie de renfort (150).

2. Bloc-batterie (100) selon la revendication 1, dans lequel la seconde traverse (125b) du premier ensemble de cellules de batterie (120) est couplée à la partie de renfort (150).

3. Bloc-batterie (100) selon la revendication 1, comprenant en outre une poutre centrale supérieure (130) couplée à la poutre centrale inférieure (112B) et recouvrant partiellement la partie de renfort (150).

4. Bloc-batterie (100) selon la revendication 3, dans lequel la partie de renfort (150) comporte une rainure centrale (150G), et
dans lequel la poutre centrale supérieure (130) est partiellement insérée dans la rainure centrale (150G).

5. Bloc-batterie (100) selon la revendication 1, comprenant en outre un premier dispositif de fixation enterré (161) couplé à la poutre centrale inférieure (112B) et configuré pour fixer la partie de renfort (150).

6. Bloc-batterie (100) selon la revendication 1, dans lequel la première traverse (125a) de chacun des premier et second ensembles de cellules de batterie (120) comporte :
une première plaque (Pa1) recouvrant une première surface latérale (121S1) de l'empilement de cellules (121) ;
une deuxième plaque (Pa2) espacée de l'empilement de cellules (121) avec la première plaque (Pa1) interposée entre eux ; et
une première nervure (Ra1) et une deuxième nervure (Ra2) respectivement couplées aux première et deuxième plaques (Pa1, Pa2) et interposées entre les première et deuxième plaques (Pa1, Pa2), et
dans lequel la seconde traverse (125b) de chacun des premier et second ensembles de cellules de batterie (120) comporte :
une troisième plaque (Pb1) recouvrant une seconde surface latérale (121S2) de l'empilement de cellules (121), dans lequel la seconde surface latérale (121S2) est opposée à la première surface latérale (121S1) ;
une quatrième plaque (Pb2) espacée de l'empilement de cellules (121) avec la troisième plaque (Pb1) interposée entre eux ; et
une troisième nervure (Rb1) et une quatrième nervure (Rb2) respectivement couplées aux troisième et quatrième plaques (Pb1, Pb2) et interposées entre les troisième et quatrième plaques (Pb1, Pb2).

7. Bloc-batterie (100) selon la revendication 6, dans lequel la deuxième nervure (Ra2) est en contact avec une surface latérale de la partie de renfort (150).

8. Bloc-batterie (100) selon la revendication 6, dans lequel la première nervure (Ra1) est en contact avec une surface inférieure de la partie de renfort (150).

9. Bloc-batterie (100) selon la revendication 6, dans lequel une longueur de la première nervure (Ra1) est supérieure à une longueur de la deuxième nervure (Ra2).

10. Bloc-batterie (100) selon la revendication 8, comprenant en outre un second dispositif de fixation enterré (163) configuré pour fixer la partie de renfort (150) à la première traverse (125a) du second ensemble de cellules de batterie (120).

11. Bloc-batterie (100) selon la revendication 10, dans lequel le second dispositif de fixation enterré (163) est disposé dans la première nervure (Ra1).

12. Bloc-batterie (100) selon la revendication 10, dans lequel le second dispositif de fixation enterré (163) est disposé dans la troisième nervure (Rb1).

13. Bloc-batterie (100) selon la revendication 12, dans lequel le second dispositif de fixation enterré (163) passe à travers la première nervure (Ra1) et la partie de renfort (150).
